# EUROPÄISCHE PATENTSCHRIFT

(11) **EP 4 178 813 B1**
(45) Veröffentlichungstag und Bekanntmachung des Hinweises auf die Patenterteilung: **11.09.2024**
(21) Anmeldenummer: 21742708.7
(22) Anmeldetag: 02.07.2021
(51) Int. Cl.: B60C 13/00, B60C 11/03

(54) **FAHRZEUGREIFEN AUFWEISEND EINE OBERFLÄCHENKONTRASTSTRUKTUR**
VEHICLE TYRES HAVING A CONTRASTING SURFACE STRUCTURE
PNEUS DE VÉHICULE AYANT UNE STRUCTURE DE SURFACE DE CONTRASTE

(30) Priorität: 09.07.2020 DE 102020208616
(43) Veröffentlichungstag der Anmeldung: 17.05.2023
(73) Patentinhaber: Continental Reifen Deutschland GmbH, 30175 Hannover (DE)
(72) Erfinder: DREIER, Steven, 30165 Hannover (DE); JURCO, Juraj, 30165 Hannover (DE); RITTWEGER, Stefan, 30165 Hannover (DE); VOELKER, Bert, 30165 Hannover (DE)
(74) Vertreter: Continental Corporation
(86) Internationale Anmeldenummer: PCT/DE2021/200087
(87) Internationale Veröffentlichungsnummer: WO 2022/008011

(56) Entgegenhaltungen:
- EP-A1- 3 296 130
- JP-B2- 6 495 732
- US-A1- 2017 050 473

## Beschreibung

Die Erfindung betrifft einen Fahrzeugreifen mit zumindest einem auf einer Außenfläche, insbesondere einer Außenfläche einer Seitenwand und/oder eines Laufstreifens, des Fahrzeugreifens ausgebildeten Flächenelement mit einer Oberflächenkontraststruktur aufweisend nebeneinander angeordnete Lamellen.

Es ist bekannt, auf der Außenfläche von Fahrzeugreifen, insbesondere auf einer Außenfläche von Seitenwänden und/oder dem Laufstreifen, Flächenelemente mit einer Kontraststruktur auszubilden, welche vorrangig die Aufgabe haben, einen Kontrast zu anderen, insbesondere zu unstrukturierten, Flächenbereichen der Seitenwände und/oder des Laufstreifens zu schaffen, um derart die Erkennbarkeit von auf der Seitenwand und/oder dem Laufstreifen befindlichen Markierungen zu verbessern. Eine Markierung kann dabei zumindest ein graphisches Element wie eine Abbildung, ein Schriftzeichen, einen Firmennamen, ein Firmenlogo, eine Kennzeichnung, eine Fläche, etc. umfassen. Das Flächenelement kann dabei Teil der Markierung sein, die Markierung bilden und/oder diese ganz oder teilweise umgeben.

Eine solche Kontraststruktur weist in der Regel Erhebungen und/oder Vertiefungen mit Flanken auf. Die Streuung und Absorption von Licht an den Flanken verringert die Reflektion des Lichts an der Oberfläche des Reifens, wodurch die Helligkeitswirkung verändert ist. In der Regel wirken dabei mit Erhebungen und/oder Vertiefungen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand und/oder des Laufstreifens, ermöglicht. Hierdurch kann eine Markierung verbessert sichtbar gemacht werden. Nebeneinander angeordnete Lamellen haben sich dabei als geeignete Elemente einer solchen Oberflächenkontraststruktur erwiesen. Lamellen weisen dabei eine längliche Erstreckung auf, wobei die Länge entlang einer Längserstreckung der Lamelle mindestens doppelt so lang sein kann wie ihre Höhe.

Derartige Flächenelemente aufweisend eine Kontraststruktur werden in der Regel im Zuge der Vulkanisation des Reifens mittels einer formgebenden eine Negativkontur der Kontraststruktur aufweisenden Vulkanisationsform in den Reifen geprägt. Eine Oberfläche aufweisend eine Kontraststruktur eines bereits vulkanisierten Reifens kann aber auch durch Abtragung, z.B. mittels Gravur, oder durch ein additives Verfahren erreicht werden. Bekannt ist beispielsweise aus der US 20120227879 A1 ein Fahrzeugluftreifen, der auf seiner äußeren Oberfläche zur kontrastreichen Oberflächengestaltung eine Oberflächenkontraststruktur aus einer Vielzahl von geradlinigen nebeneinander angeordneten Lamellen oder eine Vielzahl an faserartigen Erhebungen aufweist. Aus den Dokumenten JP 6495732 B2 und EP 3296130 A1 sind wellenförmige Lamellen und zapfenförmige Erhebungen bekannt. Die Amplituden der Wellenlinien sind gegenüber dem Abstand der wellenförmigen Lamellen verhältnismäßig gering. Nachteilig an derartigen Ausführungsformen ist, dass diese Oberflächenkontraststrukturen eine begrenzte Kontrastwirkung haben.

Gleichzeitig ist der Aufwand in der Formherstellung und späteren Handhabung in der Reifenproduktion, z.B. der Entlüftung im Vulkanisationsprozess sowie der Formenreinigung, zu beachten.

Aufgabe ist es daher, bei mäßigem Herstellungsaufwand die Kontrastwirkung zu verstärken.

Die Aufgabe wird dadurch gelöst, dass die Lamellen jeweils eine wellenförmige Längserstreckung entlang einer Wellenausbreitungsrichtung aufweisen, wobei die wellenförmige Längserstreckung in der Draufsicht entlang einer wellenförmig Linie mit sich in Wellenausbreitungsrichtung in ihrer Krümmungsrichtung abwechselnden Scheitelpunkten verläuft, dass die wellenförmigen Linien zumindest eines ersten Lamellenpaares von zwei zueinander benachbart angeordneten Lamellen der Lamellen miteinander verzahnt angeordnet sind und Scheitelpunktpaare mit jeweils einem Scheitelpunkt beider wellenförmigen Linien aufweisen, wobei die beiden Scheitelpunkte jedes Scheitelpunktpaares die gleiche Krümmungsrichtung aufweisen und zueinander benachbart angeordnet sind und dass zumindest eines der Scheitelpunktpaare der wellenförmigen Linien des zumindest einen ersten Lamellenpaares als ein erstes Scheitelpunktpaar eine räumlich zwischen seinen Scheitelpunkten und den wellenförmigen Linien angeordnete zapfenförmige Erhebung aufweist.

Eine solche Oberflächenkontraststruktur mit zueinander benachbart angeordneten Lamellen, die jeweils eine wellenförmige Längserstreckung entlang einer Wellenausbreitungsrichtung aufweisen, wobei die wellenförmige Längserstreckung in der Draufsicht entlang einer wellenförmig Linie mit sich in Wellenausbreitungsrichtung in ihrer Krümmungsrichtung abwechselnden Scheitelpunkten verläuft, weist eine hervorragende Kontrastwirkung auf. Durch die wellenförmige Längserstreckung ändern einander gegenüberliegende sich auf beiden Seiten eines Grates erstreckende Flanken der Lamellen entlang der Wellenausbreitungsrichtung ihre Ausrichtung, wodurch einfallendes Licht von den Flanken in unterschiedliche Richtungen reflektiert wird.

Die wellenförmige Linie einer Lamelle kann dabei weitgehend einer senkrechten Projektion einer Gratlinie des Grates der Lamelle auf eine flächige Erstreckung des Flächenelements oder einer senkrechten Projektion eines Massenschwerpunktes eines Querschnitts durch die Lamelle senkrecht zur Längserstreckung der Lamelle auf die flächige Erstreckung des Flächenelements entsprechen. Die Draufsicht kann einer senkrechten Projektion auf die flächige Erstreckung des Flächenelements entsprechen.

Die Kontrastwirkung wird weiter verbessert, indem die wellenförmigen Linien des zumindest eines ersten Lamellenpaares von zwei zueinander benachbart angeordneten Lamellen der Lamellen miteinander verzahnt angeordnet sind. Eine verzahnte Anordnung zweier zueinander benachbart angeordneter wellenförmiger Linien bzw. der zugehörigen Lamellen bedeutet, dass jeder zweite Scheitelpunkt der einen wellenförmigen Linie zu mindestens 180° von der anderen wellenförmigen Linie umgeben ist und umgekehrt. Durch die verzahnte Anordnung der wellenförmigen Linien des zumindest einen ersten Lamellenpaares ist trotz wellenförmiger Ausdehnung der Lamellen quer zur Wellenausbreitungsrichtung eine besonders dichte Anordnung der Lamellen ermöglicht. So können die wellenförmigen Linien des zumindest einen ersten Lamellenpaares voneinander beabstandet sein und dabei einen Abstand B aufweisen, der kleiner ist als das Doppelte einer Amplitude Ader wellenförmigen Linien.

Die Dichte an Strukturelementen und an unterschiedlich orientierten Flankenflächen ist weiter dadurch erhöht, dass die wellenförmigen Linien des zumindest eines ersten Lamellenpaares Scheitelpunktpaare mit jeweils einem Scheitelpunkt beider wellenförmigen Linien aufweisen, wobei die beiden Scheitelpunkte jedes Scheitelpunktpaares die gleiche Krümmungsrichtung aufweisen und zueinander benachbart angeordnet sind und dass zumindest eines der Scheitelpunktpaare der wellenförmigen Linien des zumindest einen ersten Lamellenpaares als ein erstes Scheitelpunktpaar eine räumlich zwischen seinen Scheitelpunkten und den wellenförmigen Linien angeordnete zapfenförmige Erhebung aufweist.

Eine zapfenförmige Erhebung weist dabei eine Längserstreckung in Wellenausbreitungsrichtung auf, die kleiner ist als das Minimum der Abstände der beiden Scheitelpunkte des ersten Scheitelpunktpaares zu ihren jeweils benachbart angeordneten Scheitelpunkten ihrer jeweiligen wellenförmigen Linien, jeweils gemessen in Wellenausbreitungsrichtung. Gemessen auf halber Höhe der zapfenförmigen Erhebung kann die Längserstreckung kleiner als 2/3-mal das Minimum der genannten Abstände betragen.

Die Anordnung einer solchen zapfenförmigen Erhebung trotz dichter Anordnung der Lamellen ist durch die wellenförmige Ausgestaltung und die verzahnte Anordnung der Lamellen bzw. der wellenförmigen Linien ermöglicht. Denn hierdurch kann ein effektiver Abstand zwischen den wellenförmige Linien des zumindest einen ersten Lamellenpaares im Bereich der Scheitelpunkte des ersten Scheitelpunktpaares größer sein als in einem Bereich zwischen dem ersten Scheitelpunktpaar und einem benachbart angeordneten Scheitelpunktpaar der wellenförmigen Linien, insbesondere größer sein als in einem Bereich eines zum ersten Scheitelpunktpaar benachbart angeordneten Wendepunktes der Krümmungsrichtung zumindest einer der wellenförmigen Linien des zumindest einen ersten Lamellenpaares. Hierdurch steht zwischen den Scheitelpunkten des ersten Scheitelpunktpaares zusätzlicher Platz zur Verfügung. Der effektive Abstand ist dabei gemessen senkrecht zur wellenförmigen Linie einer der beiden wellenförmigen Linien. Erfindungswesentlich ist, dass dieser zusätzliche Platz zwischen wellenförmige Linien und den Scheitelpunkten des ersten Scheitelpunktpaares der wellenförmigen Linien eine zusätzliche zapfenförmige Erhebung aufweist.

Somit ist eine besonders dichte Strukturierung der Oberfläche, die besonders kleinteilig ist, geschaffen, wodurch die Reflexion von Licht an der Oberflächenkontraststruktur reduziert ist. Hierdurch ist eine verstärkte Kontrastwirkung erreicht.

Diese Oberflächenkontraststruktur ermöglicht einen guten Kompromiss aus Kontrast sowie Produktionsaufwand der Form und des Reifens. Zudem erweist sich die Struktur als ausreichend resistent gegenüber Anscheuerung im Gebrauch.

Bei mäßigem Herstellungsaufwand ist somit die Kontrastwirkung verstärkt.

Eine erste Ausführungsform zeichnet sich dadurch aus, dass zumindest ein Viertel, bevorzugt zumindest die Hälfte, besonders bevorzugt alle, der Scheitelpunktpaare der wellenförmigen Linien des zumindest einen Lamellenpaares als erstes Scheitelpunktpaar ausgebildet sind.

Die verzahnte Anordnung der wellenförmigen Linien ermöglicht für das zumindest eine erste Lamellenpaar die Ausbildung einer Vielzahl an ersten Scheitelpunktpaaren aufweisend jeweils eine zapfenförmige Erhebung zwischen den Scheitelpunkten. Durch eine Erhöhung der Anzahl an zapfenförmigen Erhebungen ist die Kontrastwirkung weiter verstärkt. Eine besonders gleichmäßige Kontrastwirkung ist erreichbar, wenn die Scheitelpunktpaare eine regelmäßige Abfolge in Wellenausbreitungsrichtung bilden. Beispielsweise kann jedes vierte oder jedes zweite Scheitelpunktpaar als erstes Scheitelpunktpaar ausgebildet sein. Die Kontrastwirkung ist besonders stark, wenn alle Scheitelpunktpaare als erstes Scheitelpunktpaar ausgebildet sind.

Eine weitere Ausführungsform zeichnet sich dadurch aus, dass zumindest ein Viertel, bevorzugt zumindest die Hälfte, besonders bevorzugt alle, der Paare an zueinander benachbart angeordneten Lamellen der Lamellen jeweils ein erstes Lamellenpaar bilden.

Auch hierbei ist durch eine Erhöhung der Anzahl an zapfenförmigen Erhebungen die Kontrastwirkung weiter verstärkt. Eine besonders gleichmäßige Kontrastwirkung ist erreichbar, wenn die ersten Lamellenpaare eine regelmäßige Abfolge senkrecht zur Wellenausbreitungsrichtung bilden. Beispielsweise kann jedes vierte oder jedes zweite Lamellenpaar aus zueinander benachbart angeordneten Lamellen als erstes Lamellenpaar ausgebildet sein. Die Kontrastwirkung ist besonders stark, wenn alle Lamellenpaare als erstes Lamellenpaar ausgebildet sind.

Eine weitere Ausführungsform zeichnet sich dadurch aus, dass die zapfenförmige Erhebung zumindest eines ersten Scheitelpunktpaares, bevorzugt aller ersten Scheitelpunktpaare, des zumindest einen ersten Scheitelpunktpaare an eine der Lamellen des jeweiligen ersten Lamellenpaares angebunden ist.

Hierdurch ist die Entlüftbarkeit im Zuge der formgebenden Vulkanisation des Reifens im Reifenbau verbessert.

Eine weitere Ausführungsform zeichnet sich dadurch aus, dass die zapfenförmige Erhebung zumindest eines ersten Scheitelpunktpaares, bevorzugt aller ersten Scheitelpunktpaare, des zumindest einen ersten Scheitelpunktpaares eine Längserstreckung mit einer Krümmung mit der gleichen Krümmungsrichtung wie die Krümmungsrichtung der Scheitelpunkte des jeweiligen ersten Scheitelpunktpaares aufweist.

Hierdurch ist eine besonders effiziente Nutzung des Raumes zwischen den wellenförmige Linien und der Scheitelpunkten des ersten Scheitelpunktpaares ermöglicht.

Eine weitere Ausführungsform zeichnet sich dadurch aus, dass ein Abstand B zwischen den Scheitelpunkten eines Scheitelpunktpaares, bevorzugt des zumindest einen ersten Scheitelpunktpaares, gemessen senkrecht zur Wellenausbreitungsrichtung, 0,5 mm bis 0,8 mm beträgt.

Ein so geringer Abstand B ermöglicht eine besonders dichte Strukturierung der Oberflächenkontraststruktur und somit eine verbesserte Kontrastwirkung. Zweckmäßig ist es, wenn alle ersten Scheitelpunktpaare zwischen ihren Scheitelpunkten einen derartigen Abstand B aufweisen.

In Wellenausbreitungsrichtung gesehen ist zwischen zwei zueinander benachbart angeordneten Scheitelpunkten gleicher Krümmungsrichtung einer wellenförmigen Linie jeweils ein Scheitelpunkt entgegengesetzter Krümmungsrichtung angeordnet.

Eine weitere Ausführungsform zeichnet sich dadurch aus, dass die Scheitelpunkte zumindest eines Scheitelpunktpaares, bevorzugt des zumindest einen ersten Scheitelpunktpaares, des zumindest einen ersten Lamellenpaares jeweils einen zum jeweiligen Scheitelpunkt benachbart angeordneten Scheitelpunkt gleicher Krümmungsrichtung der jeweils gleichen wellenförmige Linie aufweisen, der in einem Abstand C von 1,6 mm bis 4,0 mm angeordnet ist, gemessen in Wellenausbreitungsrichtung.

Hierdurch ist ein guter Kompromiss zwischen dichter Strukturierung der Oberflächenkontraststruktur Aufwand im Formenbau einer formgebenden Negativform erreicht. Der Abstand C kann einer Wellenlänge der wellenförmigen Linie entsprechen.

Eine weitere Ausführungsform zeichnet sich dadurch aus, dass die Scheitelpunkte zumindest eines Scheitelpunktpaares, bevorzugt des zumindest einen ersten Scheitelpunktpaares, des zumindest einen ersten Lamellenpaares jeweils einen benachbart angeordneten Scheitelpunkt entgegengesetzter Krümmungsrichtung der gleichen wellenförmige Linie aufweisen, der in einem Abstand 2*A, mit der Amplitude A gleich 0,5 mm bis 1,0 mm, angeordnet ist, gemessen senkrecht zur Wellenausbreitungsrichtung.

A kann dabei einer Amplitude der wellenförmigen Linie entsprechen. Eine derartige Amplitude Ader wellenförmigen Linien ermöglicht eine für die Kontrastwirkung vorteilhafte Änderung der Ausrichtung der Flanken der Lamellen entlang der Wellenausbreitungsrichtung.

Eine weitere Ausführungsform zeichnet sich dadurch aus, dass jede der wellenförmigen Linien des zumindest einen ersten Lamellenpaares entlang der Wellenausbreitungsrichtung eine konstante Amplitude A und einen konstanten Abstand C aufweisen.

Eine derartige regelmäßige Ausgestaltung erleichtert das Produktionsverfahren und erzeugt eine besonders gleichmäßige Kontrastwirkung.

Eine weitere Ausführungsform zeichnet sich dadurch aus, dass die beiden Lamellen des zumindest einen ersten Lamellenpaares weitgehend gleich ausgebildet sind.

Eine derartige weitgehend gleiche Ausgestaltung zueinander benachbart angeordneter Lamellen erleichtert das Produktionsverfahren und erzeugt eine besonders gleichmäßige Kontrastwirkung. Eine der zwei Lamellen kann dabei einer Parallelverschiebung, senkrecht zur Wellenausbreitungsrichtung, der anderen der zwei Lamellen des zumindest einen ersten Lamellenpaares entsprechen.

Eine weitere Ausführungsform zeichnet sich dadurch aus, dass die beiden Lamellen des zumindest einen ersten Lamellenpaares und/oder die zapfenförmige Erhebung eine Höhe H von 0,1 mm bis 1,0 mm, bevorzugt von 0,2 mm bis 0,6 mm, besonders bevorzugt von 0,2 mm bis 0,4 mm, aufweisen.

Erhebungen einer derartigen Höhe H ermöglichen eine gute Entformbarkeit bei gleichzeitig guten Kontrasteigenschaften. Die Höhe kann dabei gemessen sein senkrecht zur flächigen Erstreckung des Flächenelements, ggf. gemittelt über die Längserstreckung der Lamelle gemäß arithmetischem Mittelwert.

Eine weitere Ausführungsform zeichnet sich dadurch aus, dass die beiden Lamellen des zumindest einen ersten Lamellenpaares einander gegenüberliegende Flanken aufweisen, die einen Winkel von 5° bis 50° miteinander einschließen.

Durch derart steile Flanken wird das Licht besonders gut gestreut und gleichzeitig ist eine dichte Anordnung der Lamellen ermöglicht.

Eine weitere Ausführungsform zeichnet sich dadurch aus, dass das Flächenelement auf der Seitenwand und/oder dem Laufstreifen, bevorzugt auf der Seitenwand, ausgebildet ist.

Sowohl die Seitenwände eines Reifens als auch der Laufstreifen tragen zur äußeren Oberfläche des Reifens bei.

Vorteilhaft ist es, wenn eine oder beide Seitenwände des Reifens zumindest ein Flächenelement mit einer erfindungsgemäßen Oberflächenkontraststruktur aufweisen. Hierdurch können Markierungen besonders kontrastreich dargestellt werden.

Vorteilhaft kann es auch sein, wenn der Laufstreifen eine erfindungsgemäße Oberflächenkontraststruktur aufweist. Diese kann auf einer mit der Fahrbahn in Kontakt tretenden Laufstreifenoberflächen oder in einer Rille, insbesondere in einem Rillengrund, eines profilierten Laufstreifens angeordnet sein.

Eine weitere Ausführungsform zeichnet sich dadurch aus, dass der Fahrzeugreifen mehrere derartige Flächenelemente mit der Oberflächenkontraststruktur aufweist, die derart angeordnet sind, dass sie einen maschinenlesbaren Code, bevorzugt einen zweidimensionalen Code, besonders bevorzugt einen QR-Code, ganz oder teilweise darstellen.

Aufgrund der hervorragenden Kontrastwirkung der Oberflächenkontraststruktur eignet sie sich hervorragend zur Darstellung eines maschinenlesbaren Codes, insbesondere zur Darstellung der üblicherweise dunkel dargestellten Flächen des Codes. Die üblicherweise hell dargestellten Flächen des Codes können durch im Wesentlichen glatte, von lamellenartigen Erhebungen freie, oder im Vergleich zur erfindungsgemäßen Oberflächenkontraststruktur anders strukturierte Oberflächenbereiche ausgebildet sein.

Auch andere Markierungen umfassend zumindest ein graphisches Element wie eine Abbildung, ein Schriftzeichen, einen Firmennamen, ein Firmenlogo, eine Kennzeichnung, eine Fläche durch ein oder mehrere erfindungsgemäß ausgeführte Flächenelemente 4 durch die verbesserte Kontrastwirkung vorteilhaft darstellbar. Das Flächenelement 4 kann dabei Teil der Markierung sein, die Markierung bilden und/oder diese ganz oder teilweise umgeben.

Zweckmäßig ist es, wenn der Reifen ein Fahrzeugluftreifen ist. Es kann sich um einen Fahrzeugluftreifen für ein Fahrrad, für einen Personenkraftwagen, einen Van, ein SUV, einen Light-Truck, ein Nutzfahrzeug, ein Kraftrad oder einen Bus handeln. Besonders bevorzugt handelt es sich um einen Fahrzeugluftreifen für einen Personenkraftwagen. Derartige Fahrzeugluftreifen weisen in der Regel eine geringe Seitenwandhöhe auf. Hierdurch ist der Platz für die Anbringung von Zeichen wie Schrift oder bildliche Darstellungen in der Regel begrenzt. Für eine gute Lesbarkeit und/oder Erkennbarkeit ist somit eine hohe Kontrastwirkung besonders vorteilhaft.

Der erfindungsgemäße Reifen kann aber auch ein Vollreifen sein.

Weitere Merkmale, Vorteile und Einzelheiten der Erfindung werden nun anhand der Zeichnungen, die schematisch Ausführungsbeispiele der Erfindung darstellen, näher beschrieben. Dabei zeigen die
Fig. 1 einen Fahrzeugreifen aufweisend ein Flächenelement mit einer Oberflächenkontraststruktur,
Fig. 2 und 3 je eine Draufsicht auf ein Flächenelement;
Fig. 4 einen Querschnitt durch eine Lamelle.

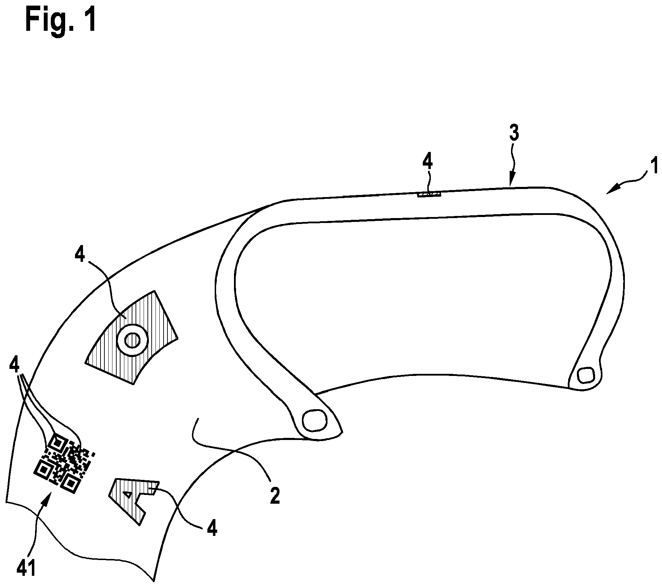

Die Figur 1 zeigt einen erfindungsgemäßen Fahrzeugreifen 1 mit zumindest einem auf einer Außenfläche 2,3 des Fahrzeugreifens 1, insbesondere einer Seitenwand 2 und/oder einem Laufstreifen 3, ausgebildeten Flächenelement 4 mit einer Oberflächenkontraststruktur 5. Bei einer Anordnung am Laufstreifen 3 kann die Oberflächenkontraststruktur dabei insbesondere auch auf Rillenflanken und/oder Rillengründen von im Laufstreifen 3 verlaufenden Rillen oder an der Außenfläche des Laufstreifens, also an mit dem Untergrund in Kontakt tretenden Lauffläche, angebracht sein.

Der Fahrzeugreifen 1 kann mehrere derartige Flächenelemente 4 mit einer Oberflächenkontraststruktur 5 aufweisen, die derart angeordnet sind, dass sie einen maschinenlesbaren Code 41, bevorzugt einen zweidimensionalen Code 41, besonders bevorzugt einen QR-Code 41, ganz oder teilweise darstellen. Die Oberflächenkontraststruktur 5 eignet sich insbesondere zur Darstellung der üblicherweise dunkel dargestellten Flächen des Codes. Die üblicherweise hell dargestellten Flächen des Codes können durch im Wesentlichen glatte, von lamellenartigen Erhebungen freie, oder im Vergleich zur erfindungsgemäßen Oberflächenkontraststruktur anders strukturierte Oberflächenbereiche ausgebildet sein.

Wie dargestellt sind auch andere Markierungen umfassend zumindest ein graphisches Element wie eine Abbildung, ein Schriftzeichen, einen Firmennamen, ein Firmenlogo, eine Kennzeichnung, eine Fläche durch ein oder mehrere erfindungsgemäß ausgeführte Flächenelemente 4 durch die verbesserte Kontrastwirkung vorteilhaft darstellbar. Das Flächenelement 4 kann dabei Teil der Markierung sein, die Markierung bilden und/oder diese ganz oder teilweise umgeben.

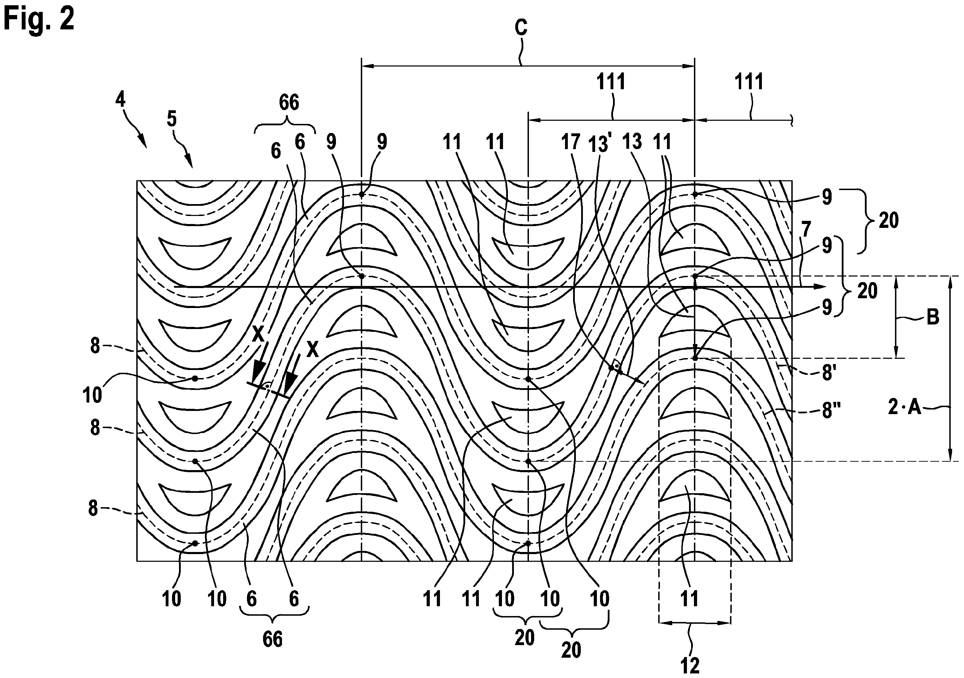

Die Figur 2 zeigt eine Draufsicht auf ein Flächenelement 4 mit einer Oberflächenkontraststruktur 5 eines erfindungsgemäßen Fahrzeugreifens, insbesondere eines erfindungsgemäßen Fahrzeugluftreifens. Es kann sich um ein in der Fig 1 gezeigtes Flächenelement 4 handeln.

Die Oberflächenkontraststruktur 5 weist nebeneinander angeordnete Lamellen 6 auf. Die Oberflächenkontraststruktur 5 zeichnet sich dadurch aus, dass die Lamellen 6 jeweils eine wellenförmige Längserstreckung entlang einer Wellenausbreitungsrichtung 7 aufweisen, wobei die wellenförmige Längserstreckung in der Draufsicht entlang einer wellenförmig Linie 8 mit sich in Wellenausbreitungsrichtung 7 in ihrer Krümmungsrichtung abwechselnden Scheitelpunkten 9,10 verläuft.

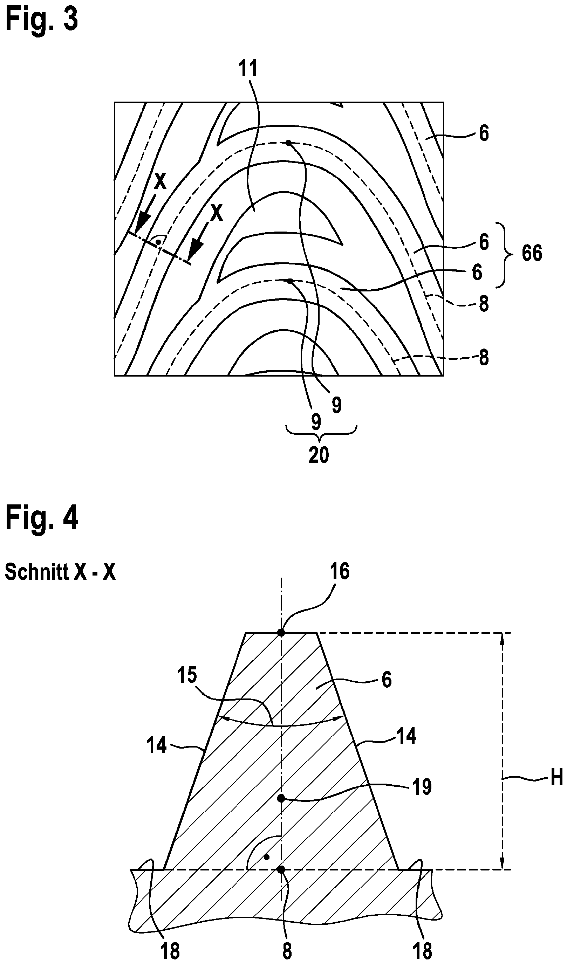

Die wellenförmige Linie 8 einer Lamelle 6 kann dabei weitgehend einer senkrechten Projektion einer Gratlinie 16 eines Grates der Lamelle auf eine flächige Erstreckung des Flächenelements 4 oder einer senkrechten Projektion eines Massenschwerpunktes 19 eines Querschnitts durch die Lamelle senkrecht zur Längserstreckung der Lamelle auf die flächige Erstreckung des Flächenelements 4 entsprechen, siehe beispielsweise Fig. 4. Die Draufsicht kann einer senkrechten Projektion auf die flächige Erstreckung des Flächenelements 4 entsprechen.

Weiter zeichnet sich die Oberflächenkontraststruktur 5 dadurch aus, dass die wellenförmigen Linien 8 zumindest eines ersten Lamellenpaares 66 von zwei zueinander benachbart angeordneten Lamellen 6 der Lamellen 6 miteinander verzahnt angeordnet sind und Scheitelpunktpaare 20 mit jeweils einem Scheitelpunkt 9,10 beider wellenförmigen Linien 8 aufweisen, wobei die beiden Scheitelpunkte 9,10 jedes Scheitelpunktpaares 20 die gleiche Krümmungsrichtung aufweisen und zueinander benachbart angeordnet sind und dass zumindest eines der Scheitelpunktpaare 20 der wellenförmigen Linien 8 des zumindest einen ersten Lamellenpaares 66 als ein erstes Scheitelpunktpaar 20 eine räumlich zwischen seinen Scheitelpunkten 9,10 und den wellenförmigen Linien 8 angeordnete zapfenförmige Erhebung 11 aufweist.

In der Figur 2 weisen die Scheitelpunkte 9 die gleiche Krümmungsrichtung auf und die Scheitelpunkte 10 weisen die gleiche Krümmungsrichtung auf.

Die verzahnte Anordnung der wellenförmigen Linien 8 des zumindest einen ersten Lamellenpaares 66 ist deutlich erkennbar. Dies wird am Beispiel der beiden zueinander benachbart angeordneten wellenförmigen Linien 8', 8" eines ersten Lamellenpaares 66 erläutert. Jeder zweite Scheitelpunkt 10 der einen wellenförmigen Linie 8' ist zu mindestens 180° von der anderen wellenförmigen Linie 8" umgeben und jeder zweite Scheitelpunkt 9 der anderen wellenförmigen Linie 8" ist zu mindestens 180° von der einen wellenförmigen Linie 8' umgeben.

Beispielhaft wird an den wellenförmigen Linien mit den Bezugsziffern 8' und 8" erläutert, dass ein effektiver Abstand 13 der einen wellenförmigen Linie 8' der einen Lamelle 6 zur anderen wellenförmigen Linie 8" der zueinander benachbart angeordneten Lamelle 6 des zumindest einen ersten Lamellenpaares 66 im Bereich der Scheitelpunkte 9 des ersten Scheitelpunktpaares 20 größer sein kann als der effektive Abstand 13' in einem Bereich zwischen dem ersten Scheitelpunktpaar 20 mit den Scheitelpunkten 9 und einem dazu benachbarten Scheitelpunktpaar 20 der wellenförmige Linien 8', 8" mit den Scheitelpunkten 10. Insbesondere kann dieser effektive Abstand 13 größer sein als in einem Bereich eines zum ersten Scheitelpunktpaar 20 benachbart angeordneten Wendepunktes 17 der Krümmungsrichtung zumindest einer der wellenförmigen Linien, hier der wellenförmige Linie8', des zumindest einen ersten Lamellenpaares 66. Der effektive Abstand 13, 13' ist gemessen senkrecht zur wellenförmigen Linie 8'.

Es ergibt sich auch, wie aus der Fig. 2 ersichtlich, dass die wellenförmigen Linien 8 des zumindest einen ersten Lamellenpaares 66 voneinander beabstandet sein können und dabei einen Abstand B aufweisen können, der kleiner ist als das Doppelte einer Amplitude Ader wellenförmigen Linien.

Eine zapfenförmige Erhebung 11 weist dabei eine Längserstreckung 12 in Wellenausbreitungsrichtung 7 auf, die kleiner ist als das Minimum der Abstände 111 der beiden Scheitelpunkte 9 des ersten Scheitelpunktpaares 20 zu ihren jeweils benachbart angeordneten Scheitelpunkten 10 ihrer jeweiligen wellenförmigen Linien 8, jeweils gemessen in Wellenausbreitungsrichtung 7. Gemessen auf halber Höhe der zapfenförmigen Erhebung 11 kann die Längserstreckung kleiner als 2/3-mal das Minimum der genannten Abstände 111 betragen.

Es können zumindest ein Viertel, bevorzugt zumindest die Hälfte, besonders bevorzugt - wie in der Fig. 2 dargestellt - alle, der Scheitelpunktpaare 20 der wellenförmigen Linien 8 des zumindest einen Lamellenpaares 66 als erstes Scheitelpunktpaar 20 ausgebildet sein und damit räumlich zwischen ihren beiden Scheitelpunkten 9,10 eine zapfenförmige Erhebung 11 aufweisen.

Es können zumindest ein Viertel, bevorzugt zumindest die Hälfte, besonders bevorzugt - wie in der Fig. 2 dargestellt - alle, der Paare an zueinander benachbart angeordneten Lamellen 6 der Lamellen jeweils ein erstes Lamellenpaar 66 bilden.

Wie in der Fig. 2 dargestellt kann die zapfenförmige Erhebung 11 zumindest eines ersten Scheitelpunktpaares 20, bevorzugt aller ersten Scheitelpunktpaare 20, des zumindest einen ersten Scheitelpunktpaares 20 eine Längserstreckung mit einer Krümmung mit der gleichen Krümmungsrichtung wie die Krümmungsrichtung der Scheitelpunkte 9, 10 des jeweiligen ersten Scheitelpunktpaares 20 aufweisen.

Weiter kann, wie in der Fig. 2 dargestellt, ein Abstand B zwischen den Scheitelpunkten 9,10 eines Scheitelpunktpaares, bevorzugt des zumindest einen ersten Scheitelpunktpaares 20, gemessen senkrecht zur Wellenausbreitungsrichtung 7, 0,5 mm bis 0,8 mm betragen.

In Wellenausbreitungsrichtung 7 gesehen ist zwischen zwei zueinander benachbart angeordneten Scheitelpunkten gleicher Krümmungsrichtung einer wellenförmigen Linie 8 jeweils ein Scheitelpunkt entgegengesetzter Krümmungsrichtung angeordnet. Beispielsweise ist in der Fig. 2, exemplarisch erklärt an der wellenförmigen Linie 8', zwischen zwei zueinander benachbart angeordneten Scheitelpunkten mit der Bezugsziffer 9 jeweils ein Scheitelpunkt mit der Bezugsziffer 10 angeordnet und umgekehrt.

Die Scheitelpunkte 9,10 zumindest eines Scheitelpunktpaares 20, bevorzugt des zumindest einen ersten Scheitelpunktpaares 20, des zumindest einen ersten Lamellenpaares 66 können jeweils einen zum jeweiligen Scheitelpunkt 9, 10 benachbart angeordneten Scheitelpunkt 9,10 gleicher Krümmungsrichtung der gleichen wellenförmige Linie 8 aufweisen, der in einem Abstand C von 1,6 mm bis 4,0 mm angeordnet ist, gemessen in Wellenausbreitungsrichtung 7. In der Figur 2 weisen alle zueinander benachbart angeordneten Scheitelpunkte 9 gleicher Krümmungsrichtung und alle zueinander benachbart angeordneten Scheitelpunkte 10 gleicher Krümmungsrichtung zumindest einer wellenförmigen Linie 8, bevorzugt aller wellenförmigen Linien 8, einen derartigen Abstand C voneinander auf. Der Abstand C kann der Wellenlänge der wellenförmigen Linie entsprechen.

Die Scheitelpunkte 9,10 zumindest eines Scheitelpunktpaares 20, bevorzugt des zumindest einen ersten Scheitelpunktpaares 20, des zumindest einen ersten Lamellenpaares 66 können jeweils einen benachbart angeordneten Scheitelpunkt 9,10 entgegengesetzter Krümmungsrichtung der gleichen wellenförmige Linie 8 aufweisen, der in einem Abstand 2*A, mit der Amplitude A gleich 0,5 mm bis 1,0 mm, angeordnet ist, gemessen senkrecht zur Wellenausbreitungsrichtung 7. A kann dabei einer Amplitude der wellenförmigen Linie entsprechen.

Wie in der Fig. 2 gezeigt, kann jede der wellenförmigen Linien 8 des zumindest einen ersten Lamellenpaares 66 entlang der Wellenausbreitungsrichtung 7 eine konstante Amplitude A und einen konstanten Abstand C aufweisen.

Bevorzugt können beiden Lamellen 6 des zumindest einen ersten Lamellenpaares 66 weitgehend gleich ausgebildet sein. Eine erste der zwei Lamellen 6 eines ersten Lamellenpaares 66 kann dabei einer Parallelverschiebung, senkrecht zur Wellenausbreitungsrichtung, einer zweiten Lamelle der zwei Lamellen 6 des ersten Lamellenpaares 66 entsprechen. In der Figur 2 kann z.B. die zweite Lamelle 6 die wellenförmige Linie mit dem Bezugszeichen 8' aufweisen und die erste Lamelle 6 die wellenförmige Linie mit dem Bezugszeichen 8".

Die Figur 3 zeigt eine Draufsicht auf eine weitere Ausführungsform eines erfindungsgemäßen Flächenelements. Die Ausführungsform kann weitgehend wie in der Figur 2 gezeigt ausgebildet sein. Die beiden Flächenelemente 4 unterscheiden sich allerdings zumindest darin, dass in der Fig. 3 die zapfenförmige Erhebung 11 zumindest eines ersten Scheitelpunktpaares 20, bevorzugt aller ersten Scheitelpunktpaare 20, des zumindest einen ersten Scheitelpunktpaares 20 an eine der Lamellen 6 des j eweiligen ersten Lamellenpaares 66 angebunden ist.

Die beiden Lamellen 6 des zumindest einen ersten Lamellenpaares 66 und/oder die zapfenförmige Erhebung 11 können eine Höhe H von 0,1 mm bis 1,0 mm, bevorzugt von 0,2 mm bis 0,6 mm, besonders bevorzugt von 0,2 mm bis 0,4 mm, aufweisen. Die Höhe kann dabei gemessen sein senkrecht zur flächigen Erstreckung des Flächenelements, siehe Fig. 4. Im Falle einer Lamelle 6 kann die Höhe über die Längserstreckung der Lamelle gemäß arithmetischem Mittelwert gemittelt sein.

Die beiden Lamellen 6 des zumindest einen ersten Lamellenpaares 66 können einander gegenüberliegende Flanken 14 aufweisen, die einen Winkel 15 von 5° bis 50° miteinander einschließen, wie in der Fig. 4 dargestellt.

Die Figur 4 zeigt eine Ausführungsform eines Querschnitts durch eine Lamelle 6 des zumindest einen ersten Lamellenpaares 66 einer Formfläche 4 senkrecht zur Längserstreckung der Lamelle. Es kann sich beispielhaft um einen Querschnitt entlang der Linie X-X in der Fig. 2 oder Fig. 3 handeln.

Die Lamelle 6 weist einen abgeflachten Grat mit einer Gratlinie 16 sowie zwei einander gegenüberliegende Flanken 14 auf. Die Lamelle 6 kann im Bereich des Grates aber auch anders, insbesondere weitgehend abgerundet, gekrümmt oder spitz zulaufend, ausgebildet sein.

Dargestellt ist auch der Massenschwerpunkt 19 des Querschnitts. Die wellenförmige Linie 8 der Lamelle 6 kann z.B. eine senkrechte Projektion der Gratlinie 16 und/oder des Massenschwerpunktes 19 auf die flächige Erstreckung des Flächenelements 4 sein.

Die beiden Flanken 14 schließen einen Winkel 15 von 5° bis 50° miteinander ein. Die Lamelle 6 kann eine Höhe H von 0,1 mm bis 1,0 mm, bevorzugt von 0,2 mm bis 0,6 mm, besonders bevorzugt von 0,2 mm bis 0,4 mm, aufweisen.

In einer nicht gezeigten Ausführungsform können die Flanken 14 auch gekrümmt in einen Flächengrund 18 übergehen. Die Flanken 14 einer Lamelle 6 kann aber auch direkt in eine Flanke einer benachbart angeordneten Lamelle oder in die zapfenförmige Erhebung 11 übergehen.

### Bezugszeichenliste

- 1: Fahrzeugreifen
- 2: Seitenwand
- 3: Laufstreifen
- 4: Flächenelement
- 41: zweidimensionaler Code
- 5: Oberflächenkontraststruktur
- 6: Lamelle
- 7: Wellenausbreitungsrichtung
- 8, 8', 8": wellenförmige Linie
- 9, 10: Scheitelpunkt
- 11: zapfenförmige Erhebung
- 12: Ausdehnung der zapfenförmigen Erhebung in Wellenausbreitungsrichtung
- 13, 13': effektiver Abstand
- 14: Flanken
- 15: Winkel
- 16: Gratlinie
- 17: Wendepunkt
- 18: Flächengrund
- 19: Massenschwerpunkt
- 20: Paar
- 111: Abstand

- A: Amplitude
- B: Abstand
- C: Abstand
- H: Höhe

## Patentansprüche

1. Fahrzeugreifen (1) mit zumindest einem auf einer Außenfläche (2,3), insbesondere einer Außenfläche einer Seitenwand (2) und/oder eines Laufstreifens (3), des Fahrzeugreifens ausgebildeten Flächenelement (4) mit einer Oberflächenkontraststruktur (5) aufweisend nebeneinander angeordnete Lamellen (6), wobei
• die Lamellen (6) jeweils eine wellenförmige Längserstreckung entlang einer Wellenausbreitungsrichtung (7) aufweisen, wobei die wellenförmige Längserstreckung in der Draufsicht entlang einer wellenförmig Linie (8) mit sich in Wellenausbreitungsrichtung (7) in ihrer Krümmungsrichtung abwechselnden Scheitelpunkten (9,10) verläuft,
• dass die wellenförmigen Linien (8) zumindest eines ersten Lamellenpaares (66) von zwei zueinander benachbart angeordneten Lamellen (6) der Lamellen (6) Scheitelpunktpaare (20) mit jeweils einem Scheitelpunkt (6,10) beider wellenförmigen Linien (8) aufweisen, wobei die beiden Scheitelpunkte (9,10) jedes Scheitelpunktpaares (20) die gleiche Krümmungsrichtung aufweisen und zueinander benachbart angeordnet sind und
• dass zumindest eines der Scheitelpunktpaare (20) der wellenförmigen Linien (8) des zumindest einen ersten Lamellenpaares (66) als ein erstes Scheitelpunktpaar (20) eine räumlich zwischen seinen Scheitelpunkten (9,10) und den wellenförmigen Linien (8) angeordnete zapfenförmige Erhebung (11)
aufweist,
**dadurch gekennzeichnet, dass**
die wellenförmigen Linien (8) des zumindest einen ersten Lamellenpaares (66) miteinander verzahnt angeordnet sind,
wobei eine verzahnte Anordnung zweier zueinander benachbart angeordneter wellenförmiger Linien bzw. der zugehörigen Lamellen bedeutet, dass jeder zweite Scheitelpunkt der einen wellenförmigen Linie zu mindestens 180° von der anderen wellenförmigen Linie umgeben ist und umgekehrt.

2. Fahrzeugreifen (1) nach Anspruch 1, **dadurch gekennzeichnet, dass** zumindest ein Viertel, bevorzugt zumindest die Hälfte, besonders bevorzugt alle, der Scheitelpunktpaare (20) der wellenförmigen Linien (8) des zumindest einen Lamellenpaares (66) als erstes Scheitelpunktpaar (20) ausgebildet sind.

3. Fahrzeugreifen (1) nach zumindest einem der vorhergehenden Ansprüche, **dadurch gekennzeichnet, dass** zumindest ein Viertel, bevorzugt zumindest die Hälfte, besonders bevorzugt alle, der Paare an zueinander benachbart angeordneten Lamellen (6) der Lamellen jeweils ein erstes Lamellenpaar (66) bilden.

4. Fahrzeugreifen (1) nach zumindest einem der vorhergehenden Ansprüche, **dadurch gekennzeichnet, dass** die zapfenförmige Erhebung (11) zumindest eines ersten Scheitelpunktpaares (20), bevorzugt aller ersten Scheitelpunktpaare (20), des zumindest einen ersten Scheitelpunktpaare (20) an eine der Lamellen (6) des jeweiligen ersten Lamellenpaares (66) angebunden ist.

5. Fahrzeugreifen (1) nach zumindest einem der vorhergehenden Ansprüche, **dadurch gekennzeichnet, dass** die zapfenförmige Erhebung (11) zumindest eines ersten Scheitelpunktpaares (20), bevorzugt aller ersten Scheitelpunktpaare (20), des zumindest einen ersten Scheitelpunktpaares (20) eine Längserstreckung mit einer Krümmung mit der gleichen Krümmungsrichtung wie die Krümmungsrichtung der Scheitelpunkte (9, 10) des jeweiligen ersten Scheitelpunktpaares (20) aufweist.

6. Fahrzeugreifen (1) nach zumindest einem der vorhergehenden Ansprüche, **dadurch gekennzeichnet, dass** ein Abstand B zwischen den Scheitelpunkten (9,10) eines Scheitelpunktpaares, bevorzugt des zumindest einen ersten Scheitelpunktpaares (20), gemessen senkrecht zur Wellenausbreitungsrichtung (7), 0,5 mm bis 0,8 mm beträgt.

7. Fahrzeugreifen (1) nach zumindest einem der vorhergehenden Ansprüche, **dadurch gekennzeichnet, dass** die Scheitelpunkte (9,10) zumindest eines Scheitelpunktpaares (20), bevorzugt des zumindest einen ersten Scheitelpunktpaares (20), des zumindest einen ersten Lamellenpaares (66) jeweils einen zum jeweiligen Scheitelpunkt (9,19) benachbart angeordneten Scheitelpunkt (9,10) gleicher Krümmungsrichtung der jeweils gleichen wellenförmige Linie (8) aufweisen, der in einem Abstand C von 1,6 mm bis 4,0 mm angeordnet ist, gemessen in Wellenausbreitungsrichtung (7).

8. Fahrzeugreifen (1) nach zumindest einem der vorhergehenden Ansprüche, **dadurch gekennzeichnet, dass** die Scheitelpunkte (9,10) zumindest eines Scheitelpunktpaares (20), bevorzugt des zumindest einen ersten Scheitelpunktpaares (20), des zumindest einen ersten Lamellenpaares (66) jeweils einen benachbart angeordneten Scheitelpunkt (9,10) entgegengesetzter Krümmungsrichtung der gleichen wellenförmige Linie (8) aufweisen, der in einem Abstand 2*A, mit der Amplitude A gleich 0,5 mm bis 1,0 mm, angeordnet ist, gemessen senkrecht zur Wellenausbreitungsrichtung (7).

9. Fahrzeugreifen (1) nach zumindest einem der vorhergehenden Ansprüche, **dadurch gekennzeichnet, dass** jede der wellenförmigen Linien (8) des zumindest einen ersten Lamellenpaares (66) entlang der Wellenausbreitungsrichtung (7) eine konstante Amplitude A und einen konstanten Abstand C aufweisen.

10. Fahrzeugreifen (1) nach zumindest einem der vorhergehenden Ansprüche, **dadurch gekennzeichnet, dass** die beiden Lamellen (6) des zumindest einen ersten Lamellenpaares (66) weitgehend gleich ausgebildet sind.

11. Fahrzeugreifen (1) nach zumindest einem der vorhergehenden Ansprüche, **dadurch gekennzeichnet, dass** die beiden Lamellen (6) des zumindest einen ersten Lamellenpaares (66) und/oder die zapfenförmige Erhebung (11) eine Höhe H von 0,1 mm bis 1,0 mm, bevorzugt von 0,2 mm bis 0,6 mm, besonders bevorzugt von 0,2 mm bis 0,4 mm, aufweisen.

12. Fahrzeugreifen (1) nach zumindest einem der vorhergehenden Ansprüche, **dadurch gekennzeichnet, dass** die beiden Lamellen (6) des zumindest einen ersten Lamellenpaares (66) einander gegenüberliegende Flanken (14) aufweisen, die einen Winkel (15) von 5° bis 50° miteinander einschließen.

13. Fahrzeugreifen (1) nach zumindest einem der vorhergehenden Ansprüche, **dadurch gekennzeichnet, dass** das Flächenelement (4) auf der Seitenwand (2) und/oder dem Laufstreifen (3), bevorzugt auf der Seitenwand (2), ausgebildet ist.

14. Fahrzeugreifen (1) nach zumindest einem der vorhergehenden Ansprüche, **dadurch gekennzeichnet, dass** der Fahrzeugreifen (1) mehrere derartige Flächenelemente (4) mit einer Oberflächenkontraststruktur (5) aufweist, die derart angeordnet sind, dass sie einen maschinenlesbaren Code (41), bevorzugt einen zweidimensionalen Code (41), besonders bevorzugt einen QR-Code (41), ganz oder teilweise darstellen.

## Claims

1. Vehicle tyre (1), having at least one surface element (4) which is formed on an outer surface (2, 3), in particular an outer surface of a sidewall (2) and/or of a tread (3), of the vehicle tyre and has a surface contrast structure (5) comprising lamellae (6) arranged adjacent to one another,
wherein
• the lamellae (6) each have a waveform longitudinal extent along a direction of wave propagation (7), wherein the waveform longitudinal extent runs, in plan view, along a waveform line (8) with vertices (9, 10) alternating in their direction of curvature in the direction of wave propagation (7),
• the waveform lines (8) of at least one first pair of lamellae (66) of two mutually adjacently arranged lamellae (6) of the lamellae (6) have pairs of vertices (20) each comprising
one vertex (6, 10) of the two waveform lines (8), wherein the two vertices (9, 10) of each pair of vertices (20) have the same direction of curvature and are arranged adjacent to one another, and
• at least one of the pairs of vertices (20) of the waveform lines (8) of the at least one first pair of lamellae (66), as a first pair of vertices (20), has a prong-shaped elevation (11) arranged spatially between its vertices (9, 10) and the waveform lines (8),
**characterized in that**
the waveform lines (8) of the at least one first pair of lamellae (66) are arranged meshing with one another,
wherein a meshed arrangement of two mutually adjacently arranged waveform lines or of the associated lamellae means that every second vertex of the one waveform line is surrounded over at least 180° by the other waveform line, and vice versa.

2. Vehicle tyre (1) according to Claim 1, **characterized in that** at least a quarter, preferably at least half, particularly preferably all, of the pairs of vertices (20) of the waveform lines (8) of the at least one pair of vertices (66) are formed as a first pair of vertices (20).

3. Vehicle tyre (1) according to at least one of the preceding claims, **characterized in that** at least a quarter, preferably at least half, particularly preferably all, of the pairs of mutually adjacently arranged lamellae (6) of the lamellae each form a first pair of lamellae (66).

4. Vehicle tyre (1) according to at least one of the preceding claims, **characterized in that** the prong-shaped elevation (11) of at least one first pair of vertices (20), preferably all of the first pairs of vertices (20), of the at least one first pairs of vertices (20) is attached to one of the lamellae (6) of the respective first pair of lamellae (66).

5. Vehicle tyre (1) according to at least one of the preceding claims, **characterized in that** the prong-shaped elevation (11) of at least one first pair of vertices (20), preferably all of the first pairs of vertices (20), of the at least one first pairs of vertices (20) has a longitudinal extent with a curvature with the same direction of curvature as the direction of curvature of the vertices (9, 10) of the respective first pair of vertices (20).

6. Vehicle tyre (1) according to at least one of the preceding claims, **characterized in that** a distance B between the vertices (9, 10) of one pair of vertices, preferably of the at least one first pair of vertices (20), measured perpendicularly to the direction of wave propagation (7), is 0.5 mm to 0.8 mm.

7. Vehicle tyre (1) according to at least one of the preceding claims, **characterized in that** the vertices (9, 10) of at least one pair of vertices (20), preferably of the at least one first pair of vertices (20), of the at least one first pair of lamellae (66) each have arranged adjacent to the respective vertex (9, 19) a vertex (9, 10) of the same direction of curvature of the respectively same waveform line (8) which is arranged at a distance C of 1.6 mm to 4.0 mm, measured in the direction of wave propagation (7).

8. Vehicle tyre (1) according to at least one of the preceding claims, **characterized in that** the vertices (9, 10) of at least one pair of vertices (20), preferably of the at least one first pair of vertices (20), of the at least one first pair of lamellae (66) each have an adjacently arranged vertex (9, 10) of opposite direction of curvature of the same waveform line (8) which is arranged at a distance 2*A, with the amplitude A equal to 0.5 mm to 1.0 mm, measured perpendicularly to the direction of wave propagation (7).

9. Vehicle tyre (1) according to at least one of the preceding claims, **characterized in that** each of the waveform lines (8) of the at least one first pair of lamellae (66) have a constant amplitude A and a constant distance C along the direction of wave propagation (7).

10. Vehicle tyre (1) according to at least one of the preceding claims, **characterized in that** the two lamellae (6) of the at least one first pair of lamellae (66) are formed largely the same.

11. Vehicle tyre (1) according to at least one of the preceding claims, **characterized in that** the two lamellae (6) of the at least one first pair of lamellae (66) and/or the prong-shaped elevation (11) have a height H of 0.1 mm to 1.0 mm, preferably of 0.2 mm to 0.6 mm, particularly preferably of 0.2 mm to 0.4 mm.

12. Vehicle tyre (1) according to at least one of the preceding claims, **characterized in that** the two lamellae (6) of the at least one first pair of lamellae (66) have opposing flanks (14), which include an angle (15) of 5° to 50°.

13. Vehicle tyre (1) according to at least one of the preceding claims, **characterized in that** the surface element (4) is formed on the sidewall (2) and/or the tread (3), preferably on the sidewall (2).

14. Vehicle tyre (1) according to at least one of the preceding claims, **characterized in that** the vehicle tyre (1) has a number of such surface elements (4) with a surface contrast structure (5), which are arranged in such a way that they fully or partially represent a machine-readable code (41), preferably a two-dimensional code (41), particularly preferably a QR code (41).

## Revendications

1. Pneu de véhicule (1), comprenant au moins un élément de surface (4) réalisé sur une face extérieure (2, 3), en particulier une face extérieure d'une paroi latérale (2) et/ou d'une bande de roulement (3) du pneu de véhicule et pourvu d'une structure de contraste de surface (5), présentant des lamelles (6) disposées côte à côte,
dans lequel
• les lamelles (6) présentent respectivement une étendue longitudinale ondulée le long d'une direction de propagation d'onde (7), dans lequel l'étendue longitudinale ondulée s'étend en vue de dessus le long d'une ligne ondulée (8) avec des sommets (9, 10) alternant au niveau de leur direction de courbure, dans la direction de propagation d'onde (7),
• les lignes ondulées (8) d'au moins une première paire de lamelles (66) de deux lamelles (6), disposées de manière mutuellement adjacente parmi les lamelles (6), présentent des paires de sommets (20) avec respectivement un sommet (6, 10) des deux lignes ondulées (8), dans lequel les deux sommets (9, 10) de chaque paire de sommets (20) présentent la même direction de courbure et sont disposés de manière mutuellement adjacente, et
• au moins l'une des paires de sommets (20) des lignes ondulées (8) de ladite au moins une première paire de lamelles (66) en tant que première paire de sommets (20) présente un bossage (11) en forme de tenon disposé physiquement entre les sommets (9, 10) de celle-ci et les lignes ondulées (8),
**caractérisé en ce que**
les lignes ondulées (8) de ladite au moins une première paire de lamelles (66) sont disposées de manière mutuellement imbriquée,
dans lequel une disposition imbriquée de deux lignes ondulées ou des lamelles associées, disposées de manière mutuellement adjacente, signifie qu'un sommet sur deux de ladite une ligne ondulée est entouré sur au moins 180° par l'autre ligne ondulée, et inversement.

2. Pneu de véhicule (1) selon la revendication 1, **caractérisé en ce qu'**au moins un quart, de préférence au moins la moitié, de manière particulièrement préférée l'ensemble des paires de sommets (20) des lignes ondulées (8) de ladite au moins paire de lamelles (66) est réalisé(e) comme une première paire de sommets (20).

3. Pneu de véhicule (1) selon au moins l'une des revendications précédentes, **caractérisé en ce qu'**au moins un quart, de préférence au moins la moitié, de manière particulièrement préférée l'ensemble des paires de lamelles (6) disposées de manière mutuellement adjacente parmi les lamelles constitue respectivement une première paire de lamelles (66).

4. Pneu de véhicule (1) selon au moins l'une des revendications précédentes, **caractérisé en ce que** le bossage en forme de tenon (11) d'au moins une première paire de sommets (20), de préférence de toutes les premières paires de sommets (20) de ladite au moins une première paire de sommets (20) est rattaché à l'une des lamelles (6) de la première paire de lamelles (66) respective.

5. Pneu de véhicule (1) selon au moins l'une des revendications précédentes, **caractérisé en ce que** le bossage en forme de tenon (11) d'au moins une première paire de sommets (20), de préférence de toutes les premières paires de sommets (20) de ladite au moins une première paire de sommets (20) présente une étendue longitudinale ayant une courbure de la même direction de courbure que la direction de courbure des sommets (9, 10) de la première paire de sommets (20) respective.

6. Pneu de véhicule (1) selon au moins l'une des revendications précédentes, **caractérisé en ce qu'**une distance B entre les sommets (9, 10) d'une paire de sommets, de préférence de ladite au moins une première paire de sommets (20), mesurée perpendiculairement à la direction de propagation d'onde (7), mesure de 0,5 mm à 0,8 mm.

7. Pneu de véhicule (1) selon au moins l'une des revendications précédentes, **caractérisé en ce que** les sommets (9, 10) d'au moins une paire de sommets (20), de préférence de ladite au moins une première paire de sommets (20), de ladite au moins une première paire de lamelles (66), présentent respectivement un sommet (9, 10) de même direction de courbure, disposé de manière adjacente au sommet (9, 19) respectif, de la même ligne ondulée (8) et qui est disposé à une distance C de 1,6 mm à 4,0 mm, mesurée dans la direction de propagation d'onde (7).

8. Pneu de véhicule (1) selon au moins l'une des revendications précédentes, **caractérisé en ce que** les sommets (9, 10) d'au moins une paire de sommets (20), de préférence de ladite au moins une première paire de sommets (20) de ladite au moins une première paire de lamelles (66), présentent respectivement un sommet (9, 10) disposé de manière adjacente, de direction de courbure opposée, de la même ligne ondulée (8), et qui est disposé à une distance 2*A, d'une amplitude A égale à 0,5 mm à 1,0 mm, mesurée perpendiculairement à la direction de propagation d'onde (7).

9. Pneu de véhicule (1) selon au moins l'une des revendications précédentes, **caractérisé en ce que** chacune des lignes ondulées (8) de ladite au moins une première paire de lamelles (66) présente le long de la direction de propagation d'onde (7) une amplitude constante A et une distance constante C.

10. Pneu de véhicule (1) selon au moins l'une des revendications précédentes, **caractérisé en ce que** les deux lamelles (6) de ladite au moins une première paire de lamelles (66) sont réalisées de manière largement identique.

11. Pneu de véhicule (1) selon au moins l'une des revendications précédentes, **caractérisé en ce que** les deux lamelles (6) de ladite au moins une première paire de lamelles (66) et/ou le bossage (11) en forme de tenon présentent une hauteur H de 0,1 mm à 1,0 mm, de préférence de 0,2 mm à 0,6 mm, de manière particulièrement préférée de 0,2 mm à 0,4 mm.

12. Pneu de véhicule (1) selon au moins l'une des revendications précédentes, **caractérisé en ce que** les deux lamelles (6) de ladite au moins une première paire de lamelles (66) présentent des flancs (14) mutuellement opposés qui forment un angle (15) de 5° à 50°.

13. Pneu de véhicule (1) selon au moins l'une des revendications précédentes, **caractérisé en ce que** l'élément de surface (4) est réalisé sur la paroi latérale (2) et/ou la bande de roulement (3), de préférence sur la paroi latérale (2).

14. Pneu de véhicule (1) selon au moins l'une des revendications précédentes, **caractérisé en ce que** le pneu de véhicule (1) présente plusieurs de ces éléments de surface (4) ayant une structure de contraste de surface (5) qui sont disposés de telle sorte qu'ils représentent entièrement ou partiellement un code lisible par machine (41), de préférence un code bidimensionnel (41), de manière particulièrement préférée un code QR (41).
